# EUROPÄISCHE PATENTANMELDUNG

(11) **EP 1 855 236 A1**
(43) Veröffentlichungstag der Anmeldung: **14.11.2007**
(21) Anmeldenummer: 07006783.0
(22) Anmeldetag: 31.03.2007
(51) Int. Cl.: G06Q 10/00

(54) **System und Verfahren zum mengenbezogenen Vergleich zwischen Planungs-und Vorgabedaten eines technischen Prozesses oder eines technischen Projektes**

(30) Priorität: 08.05.2006 DE 102006021540
(71) Anmelder: ABB Technology AG, 8050 Zurich (CH)
(72) Erfinder: Beer, Peter, Dipl.-Ing., 68307 Mannheim (DE); Liefeldt, Andreas, Dipl.-Ing., 44532 Lünen (DE)
(74) Vertreter: Miller, Toivo

(57) **Zusammenfassung**

Die Erfindung betrifft ein System und ein Verfahren zum automatisierten, mengenbezogenen Vergleich zwischen Planungs/Projekt- und Vorgabedaten eines technischen Prozesses oder eines technischen Projektes mit einem Eingabemodul zur Bereitstellung der Vorgabedaten und einem Planungswerkzeug zur Hinterlegung der Planungsdaten. Das Eingabemodul ist dafür vorgesehen, die einzelnen Elemente der Vorgabedaten als Vorgabeelemente dem Planungswerkzeug zur weiteren Verarbeitung zu übermitteln. Das Planungswerkzeug weist ein Planungsmodell auf, in welchem die einzelnen Elemente der Planungsdaten als Planungselemente abgelegt sind. Das Planungswerkzeug weist weiterhin ein Zuordnungsmodul zur Erzeugung einer Abbildung der Vorgabeelemente auf die Planungselemente auf.

Ein im Planungswerkzeug integriertes Verarbeitungsmodul führt auf der Grundlage der erzeugten Abbildung der Vorgabeelemente auf die Planungselemente automatisch einen mengenbezogenen Vergleich zwischen der Anzahl der Planungselemente und der Vorgabeelemente durch und stellt die Ergebnisse des Vergleiches einem Auswertemodul zur Verfügung.

## Beschreibung

Die Erfindung betrifft ein System und ein Verfahren zum automatisierten, mengenbezogenen Vergleich zwischen Planungs- und Vorgabedaten eines technischen Prozesses oder eines technischen Projektes.

Für die Planung einer technischen Anlage, den Ablauf eines industriellen Prozesses oder eines technischen Projektes, nachfolgend als Prozess oder Projekt bezeichnet, ist es erforderlich, möglichst zu jedem Zeitpunkt einen Überblick über den aktuellen Status bzw. bereits verplante Stückzahlen bestimmter Positionen, wie beispielsweise Aktoren, Sensoren, Schaltschränke, Signale oder Kabellängenmengen, im Vergleich zu vorgegebenen Stückzahlen, im folgenden auch als Vorgabedaten bezeichnet, zu erhalten, um beispielsweise sowohl komplexe Investitionsprojekte als auch komplexe technische Prozesse mit einem effektiven Einsatz von Ressourcen innerhalb eines vorgegebenen Zeit- und Kostenrahmens abzuwickeln. Dazu ist ein klar strukturiertes und aussagekräftiges Berichtswesen eine unabdingbare Voraussetzung, um jederzeit über den Stand des Projekts oder des Prozesses informiert zu sein. Im Folgenden werden die bereits verplanten Stückzahlen bestimmter Positionen, wie beispielsweise Aktoren, Sensoren, Schaltschränke, Signale oder Kabellängenmengen, auch als quantifizierbare Positionen bezeichnet.

Üblicherweise werden bei der Planung eines technischen Prozesses oder eines technischen Projektes die einzelnen Positionen, wie beispielsweise ein bestimmter Motortyp, an den verschiedensten Stellen des Projektes eingesetzt. Somit muss der Motortyp beispielsweise mittels eines speziellen Planungswerkzeuges in Abhängigkeit von seiner Verwendung in einer bestimmten Anzahl eingeplant werden. Daraus ergibt sich das Erfordernis, zu überprüfen, ob eine vorgegebene Stückzahl nicht durch die bereits eingeplante Stückzahl überschritten wird, also ein Vergleich der vorgegebenen Stückzahlen mit der Anzahl der bereits im Projekt geplanten Stückzahlen der jeweiligen Position.

Sofern die Planung der Anlage oder des Prozesses nur von einem Bearbeiter durchgeführt wird oder nur wenige Positionen zur Planung des Prozesses notwendig sind, ist eine Projektverfolgung ohne größere Probleme durchführbar.

Allerdings stellt die Projektverfolgung bei größeren Engineering- Projekten einen erheblichen Aufwand dar, der umso größer wird, desto mehr Bearbeiter an der Planung des Projektes oder des Prozesses beteiligt sind und desto mehr Positionen während der Planungsphase des Projektes verfolgt werden müssen.

Gegenwärtig werden bei den vorab beschriebenen Vergleichsanalysen, womit möglichst zu jedem Zeitpunkt ein Überblick über den aktuellen Status oder bereits verplante Stückzahlen bestimmter Positionen gegeben wird, die geplanten Positionen automatisiert erfasst. Ein Mengenvergleich zwischen den geplanten Positionen und den Vorgabedaten wird jedoch überwiegend manuell durchgeführt, was nachfolgend beschrieben ist.

Um die mit Hilfe eines Planungswerkzeugs verplante Mengen mit den Vorgabedaten zu vergleichen, werden die Daten aus dem verwendeten Planungswerkzeug exportiert und gegebenenfalls extern sortiert und/ oder gefiltert. In einem zweiten Schritt werden die exportierten und aufbereiteten Planungsdaten mit den externen Vorgabedaten verglichen. Der eigentliche Vergleich erfolgt entweder manuell durch Suche der korrespondierenden Datenpaare oder teilweise toolgestützt mittels Makros aus Tabellenkalkulationsprogrammen. In einem dritten Schritt werden die Ergebnisse des Vergleichs beispielsweise für einen Bericht individuell aufbereitet.

Die vorab beschriebene Vorgehensweise erfordert mehrere zum Teil manuell auszuführende Arbeitsschritte, die bei größeren Datenmengen entsprechend zeitaufwendig sind. Sofern mehrere Mitarbeiter oder Werkzeuge an einer Analyse beteiligt sind, müssen die Daten zusammengeführt und/oder synchronisiert werden. Diese manuellen Arbeitsschritte implizieren, dass diese Verfahren nicht nur zeitintensiv, sondern auch fehlerbehaftet sind.

Ausgehend von den beschriebenen Nachteilen liegt der Erfindung die Aufgabe zugrunde, ein System und ein Verfahren zum automatisierten, mengenbezogenen Vergleich zwischen Planungs- und Vorgabedaten eines technischen Prozesses oder eines technischen Projektes anzugeben, wodurch vorgenannte Nachteile des Standes der Technik überwunden werden.

Diese Aufgabe wird erfindungsgemäß durch ein System der eingangs genannten Art mit den im Anspruch 1 angegebenen Merkmalen gelöst. Vorteilhafte Ausgestaltungen, Verbesserungen des erfindungsgemäßen Systems sowie ein Verfahren zur Ausführung des Systems sind in weiteren Ansprüchen und in der Beschreibung angegeben.

Das erfindungsgemäße System zum automatisierten, mengenbezogenen Vergleich zwischen Planungs/Projekt - und Vorgabedaten eines technischen Prozesses oder eines technischen Projektes umfasst ein Eingabemodul zur Bereitstellung der Vorgabedaten, beispielsweise aus einem Angebot oder einer Planungsunterlage und ein Planungswerkzeug in welchen die Planungsdaten hinterlegt sind.

Das Eingabemodul ist dafür vorgesehen, die einzelnen Elemente der Vorgabedaten als Vorgabeelemente dem Planungswerkzeug zur weiteren Verarbeitung zu übermitteln.

Das Planungswerkzeug weist ein Planungsmodell auf, in welchem die einzelnen Elemente der Planungsdaten als Planungselemente abgelegt sind. Weiterhin weist das Planungswerkzeug ein Zuordnungsmodul zur Erzeugung einer Abbildung der Vorgabeelemente auf die Planungselemente auf.

Ein im Planungswerkzeug integriertes Verarbeitungsmodul führt auf der Grundlage der erzeugten Abbildung der Vorgabeelemente auf die Planungselemente automatisch einen mengenbezogenen Vergleich zwischen der Anzahl der vom Planungsmodell bereitgestellten Planungselemente und der vom Eingabemodul bereitgestellten Vorgabeelemente durch und stellt die Ergebnisse des Vergleiches einem Auswertemodul zur Verfügung. Dabei bezieht sich der mengenbezogene Vergleich zwischen den Planungs- und Vorgabedaten auf quantifizierbare Positionen, also beispielsweise auf Stückzahlen und/oder auf Mengen mit dazugehörigen Eigenschaften.

Die Eingabe der Vorgabedaten aus der Angebots- oder Planungsphase in das Planungswerkzeug kann einerseits durch einen automatisierten Datenimport andererseits auch durch eine manuelle Eingabe erfolgen, wobei den Vorgabedaten neben der zugeordneten Stückzahl oder Menge auch ein eindeutiges Identifikationsmerkmal zugeordnet ist. Das Identifizierungsmerkmal stammt aus der Angebots- oder Planungsphase bzw. aus einem Werkzeug, das zur Angebotserstellung verwendet wurde.

In einer Ausführungsform der Erfindung ist vorgesehen die Vorgabedaten auch außerhalb des Planungswerkzeugs zu verwaltet und jeweils erst zur Auswertung in das Auswertemodul einzulesen.

Da ursprünglich eingepflegte Vorgabedaten oftmals Änderungen unterliegen, ist vorgesehen, die Vorgabedaten während der gesamten Planungsphase oder Projektlaufzeit zu ändern bzw. anzupassen. Änderungen der Vorgabedaten beruhen beispielsweise auf einer Umplanung der Anlage oder eines Prozesses, auf zusätzlichen oder detaillierten Informationen nach Beginn der Planung oder auf dem Wegfall oder der Hinzunahme von zu erbringenden Leistungen.

Die Verwaltung der Änderungen wird dabei entweder kumulativ oder inkrementell in Form von Nachträgen ausgeführt. Bei der kumulativen Verwaltung werden die Vorgabedaten, auch als Vorgabewerte bezeichnet, bei einer Änderung direkt überschrieben, so dass nur ein aktueller Vorgabewert pro Position vorhanden ist. Bei der inkrementellen Nachtragsverwaltung werden jeweils die Mehrungen und Minderungen gespeichert und somit gleichzeitig eine Historie verwaltet.

Das Zuordnungsmodul ist dafür vorgesehen, den Elementen des Planungswerkzeuges zur Abbildung der Vorgabeelemente auf die Planungselemente ein entsprechendes eindeutiges Identifizierungsmerkmal zuzuweisen, verknüpft somit die Planungselemente mit externen Entitäten und erzeugt darauf basierend eine Abbildung der jeweiligen Vorgabeelemente auf die entsprechenden Planungselemente. Das ldentifikationsmerkmal wird dabei zur Identifikation und Zuordnung der Elemente und Entitäten benötigt.

Eine Entität beschreibt ein externes Vorgabeelement, beispielsweise aus einem Angebot oder einer Planungsunterlage, wobei das Vorgabeelement zählbar und/oder eine oder mehrere seiner Eigenschaften, wie beispielsweise Längen, quantifizierbar sind. Entitäten sind üblicherweise Bauteile oder Produktgruppen, beispielsweise ein Gerät eines Produktkatalogs, das im Planungswerkzeug als Element abgebildet ist. Im Idealfall wird die Abbildung der Vorgabeelemente auf die Planungselemente, im folgenden auch als Mapping bezeichnet, einmalig im Planungswerkzeug hinterlegt und zu späteren Zeitpunkten innerhalb der jeweiligen Planungs- oder Projektphase nur noch angepasst. Eine Anpassung des Mappings ist beispielsweise dann erforderlich, wenn neue Geräte in einen Produktkatalog aufgenommen werden.

Das Auswertemodul ist dafür vorgesehen die Anzahl der Planungselemente zu ermitteln, denen ein Mapping zugewiesen wurde, wobei diese Planungselemente nachfolgend auch als umgesetzte Planungselemente bezeichnet werden. Die ermittelte Anzahl der umgesetzten Planungselemente wird den Vorgabedaten gegenübergestellt, wobei die Verbindung bzw. Verknüpfung zwischen den Planungselementen und den Vorgabeelementen durch das gemeinsame eindeutige Identifikationsmerkmal vorzugsweise in folgender Darstellung gegeben ist: "Vorgabemengen Entität - Identifikationskennzeichen - Anzahl Planungselemente".

In einer bevorzugten Ausführungsform der Erfindung ist eine Visualisierung der von der Auswerteeinheit bereitgestellten Ergebnisse des Vergleichs zwischen der Anzahl der Planungselemente und der Vorgabeelemente mittels einer Tabelle vorgesehen.

Optional ist ein Erweiterungsmodul vorgesehen, welches mittels eines Auswertealgorithmus eine oder mehrere quantifizierbare Eigenschaften der ermitteltem Elemente, wie beispielsweise Längen oder Volumen auswertet und diese mit den entsprechenden Vorgabedaten vergleicht. Hierzu wird das das Mapping um eine erste Information bezüglich bestimmter Eigenschaften der Elemente erweitert, die bei der Auswertung zu berücksichtigen sind. Weiterhin wird das Mapping um eine zweite Information erweitert, welche die Auswertung und/oder Ermittlung des mengenbezogenen Vergleiches zwischen der Anzahl der Planungselemente und der Vorgabeelemente definiert.

Beispielsweise erfolgt eine Angebotskalkulation von Kabeln eines bestimmten Typs pauschal bezogen auf die Gesamtlänge. Im Planungswerkzeug werden Kabel als Element mit der Eigenschaft "Länge" verwaltet. Nach der Suche der Kabel-Elemente werden die Längen der Kabel addiert und die sich daraus ergebende Summe mit der entsprechenden Vorgabe aus dem Angebot verglichen. Auf identische Weise ist auch die Ermittlung von Montagestunden bestimmbar und vergleichbar.

Das Verfahren zum automatisierten, mengenbezogenen Vergleich zwischen Planungs/Projekt - und Vorgabedaten eines technischen Prozesses oder eines technischen Projektes mit dem die Aufgabe weiterhin gelöst wird, ist dem Anspruch 14 zu entnehmen. Das erfindungsgemäße Verfahren beruht auf einer systematischen Analyse und Auswertung von Projektdaten mittels eines automatisierten mengenbezogenen Vergleichs zwischen der Anzahl von Elementen eines Planungswerkzeugs und den entsprechenden Vorgabedaten. Eine automatisierte Auswertung ermöglicht es in vorteilhafter Weise, unabhängig von der Zeit und den Eingaben oder Aussagen der Mitarbeiter, jederzeit den aktuellen Projektstatus zu ermitteln und somit mengenbezogene Aussagen in Bezug zu Vorgabedaten abzuleiten.

Dabei werden die Vorgabedaten als Vorgabeelemente von einem Eingabemodul und die Planungsdaten als Planungselemente von einem Planungswerkzeug bereitgestellt, wobei die Vorgabedaten beispielsweise aus einem Angebot oder eine Planungsunterlage und die Planungsdaten als zählbare Elemente und/ oder Baugruppen vom Planungswerkzeug generiert werden.

Mittels eines Zuordnungsmoduls wird eine Abbildung der Vorgabeelemente auf die Planungselemente erzeugt. In einem ersten Schritt werden auf der Grundlage der erzeugten Abbildung der Vorgabeelemente auf die Planungselemente mittels eines im Planungswerkzeug integriertem Verarbeitungsmoduls automatisch ein mengenbezogener Vergleich zwischen der Anzahl der Planungselemente und der Vorgabeelemente durchführt und die Ergebnisse des Vergleiches einem Auswertemodul zur Verfügung gestellt.

In einem weiteren Schritt wird den Planungselementen mittels des Zuordnungsmoduls jeweils ein eindeutiges Identifizierungsmerkmal zugewiesen, die Planungselemente jeweils mit externen Entitäten verknüpft und darauf basierend eine Abbildung der jeweiligen Vorgabeelemente auf die entsprechenden Planungselemente erzeugt. Somit werden mittels des Identifizierungsmerkmales eine eindeutige Identifikation und Zuordnung der Elemente und Entitäten ausgeführt.

Mit dem erfindungsgemäßen Verfahren wird eine einfache und schnelle Überprüfung von mengenbezogenen Abweichungen zwischen der Planung eines technischen Projektes oder eines technischen Prozesses und den in beispielsweise einem Angebot festgelegten Vorgaben in Hinblick auf den Aufwand und die Zeitdauer der Überprüfung ermöglicht.

Ein weiterer Vorteil des beschriebenen Verfahrens beruht darauf frühzeitig Differenzen zwischen der Planung des Projektes und dem Angebot zu erkennen und darauf entsprechend zu reagieren.

Anders als bei einer ausschließlichen Betrachtung der als Kosten-Controlling bezeichnete Kostenseite, bei welcher der Zusammenhang zwischen den Mengen und Kosten vernachlässigt wird, der durch Einkaufsrabatte, grobe Budgetkalkulationen oder Fehlbuchungen beeinflusst wird und der die Kostensicht "unscharf' gegenüber den dahinter stehenden Mengen macht, wird mit dem auch als automatisiertes Mengen-Controlling bezeichenbare erfindungsgemäße Verfahren in vorteilhafter Weise ergänzend zum derzeit üblichen Werkzeug-unterstütztem "Kosten-Controlling" eine erhöhte Planungssicherheit in der Projektabwicklung gewährleistet.

Ein weiterer Vorteil des erfindungsgemäßen Verfahrens ergibt sich aus der Berücksichtigung des Zeitfaktors. Kosten können erst dann anfallen, und somit nachvollzieh- und überprüfbar sein, wenn diese durch eine Bestellung und Rechnungsbegleichung tatsächlich anfallen. Die Mengen, welche in der Planung eines Projektes umgesetzt werden sind jetzt deutlich früher bekannt. So ist durch ein "Mengen-Controlling" eine frühzeitigere Aussage über die Entwicklung der Mengen erreichbar und entsprechende Maßnahmen, wie beispielsweise eine Überprüfung der eigenen Planung, eine Überprüfung der Kundendaten, eine Reaktion auf Mehrungen oder Minderungen durch Änderungen der Liefermengen vom Lieferanten oder eine Umplanung von Ressourcen, sind dem entsprechend früher durchführbar.

Ein weiterer Vorteil ist darin zu sehen, dass mögliche Maßnahmen oder Reaktionen bei der Überschreitung der Vorgabedaten, welche beispielsweise Nachforderungen gegenüber dem Kunden bedingen, frühzeitig einleitbar sind. Auch sind bei einer signifikanten Unterschreitung der Vorgabedaten Rückschlüsse auf den jeweiligen Projektfortschritt erkennbar.

Ein weiterer Vorteil ist in der Massendaten-Verarbeitung, auch als Bulk-Data - Handling bezeichnet, zu sehen, die eine effiziente Bewertung großer Mengen von Planungselementen, die zudem noch über komplexe Strukturen verteilt sind, ermöglicht.

Das erfindungsgemäße System und Verfahren wird vorzugsweise in der Verfahrens-, Anlagen- oder Leittechnik-Planung für eine systematische Analyse und Auswertung der Projektdaten mittels dem automatisierten, mengenbezogenen Vergleich zwischen den Planungs- und Vorgabedaten eingesetzt. Findet aber auch Anwendung in der technischen Planung, wie beispielsweise der Verfahrenstechnik, der Anlagentechnik, dem Anlagenbau, der Automatisierungstechnik, der Elektrotechnikplanung und der Verkabelung.

Anhand der in den folgenden Figuren dargestellten Ausführungsbeispiele sollen die Erfindung sowie vorteilhafte Ausgestaltungen, Verbesserungen und weitere Vorteile der Erfindung näher erläutert und beschrieben werden.

Es zeigen:
- **Fig.** 1: einen manuellen Mengenvergleich zwischen Planungs- und Vorgabedaten entsprechend dem Stand der Technik,
- **Fig.** 2: eine Ausführungsform des erfindungsgemäßen Systems zum automatisierten, mengenbezogenen Vergleich zwischen Planungs/Projekt- und Vorgabedaten eines technischen Prozesses oder eines technischen Projektes,
- **Fig.** 3: eine beispielhafte integrierte Nachtragsverwaltung,
- **Fig.** 4: eine beispielhafte Darstellung der Ergebnisse des Vergleichs, und
- **Fig.** 5: einen beispielhaften Verfahrensablauf zum automatisierten, mengenbezogenen Vergleich zwischen Planungs/Projekt - und Vorgabedaten eines technischen Prozesses oder eines technischen Projektes.

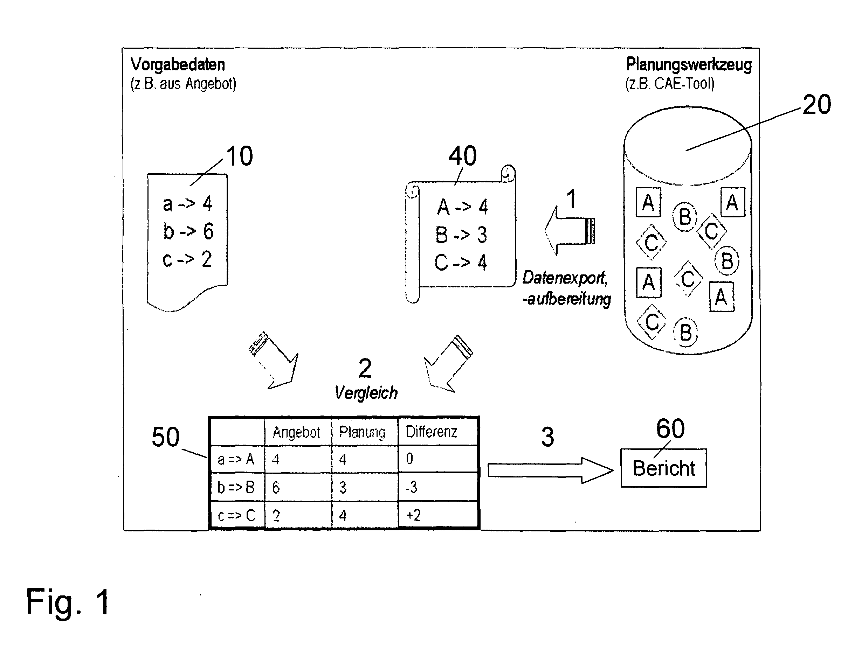

**Fig.** 1 zeigt einen manuellen Mengenvergleich zwischen Planungs- und Vorgabedaten 10, 40 entsprechend dem Stand der Technik. Das Angebot eines Projekts weist 4-mal die Position a auf. Während der Planung mittels eines Planungswerkzeuges 20 wird die Position A 4-mal eingeplant und es ist zu überprüfen, ob die Stückzahl des Angebots a nicht durch die eingeplante Stückzahl A überschritten wird. Stand der Technik ist, dass die oben beschriebene Vergleichsanalyse nicht vollständig automatisiert durchgeführt wird, sondern der Vergleich, beispielsweise mittels einer Tabellendarstellung 50 ausgewertet wird. Um die mit Hilfe des Planungswerkzeugs 20 verplante Mengen bzw. Planungsdaten A, B, C, 40 mit externen Mengen bzw. Vorgabedaten a, b, c zu vergleichen, werden die Planungsdaten A, B, C, 40 daher aus dem verwendeten Planungswerkzeug 20 in einem ersten Schritt 1 manuell oder Automatisch exportiert, extern sortiert und/ oder gefiltert. In einem zweiten Schritt 2 werden die exportierten und aufbereiteten Planungsdaten A, B, C, 40 mit den externen Vorgabedaten a, b, c, 10 verglichen. Der eigentliche Vergleich erfolgt entweder manuell durch Suche der korrespondierenden Datenpaare oder teilweise toolgestützt durch übliche Tabellenkalkulations-Makros 50. In einem dritten Schritt 3 werden die Ergebnisse des Vergleichs, beispielsweise für einen Bericht 60, individuell aufbereitet.

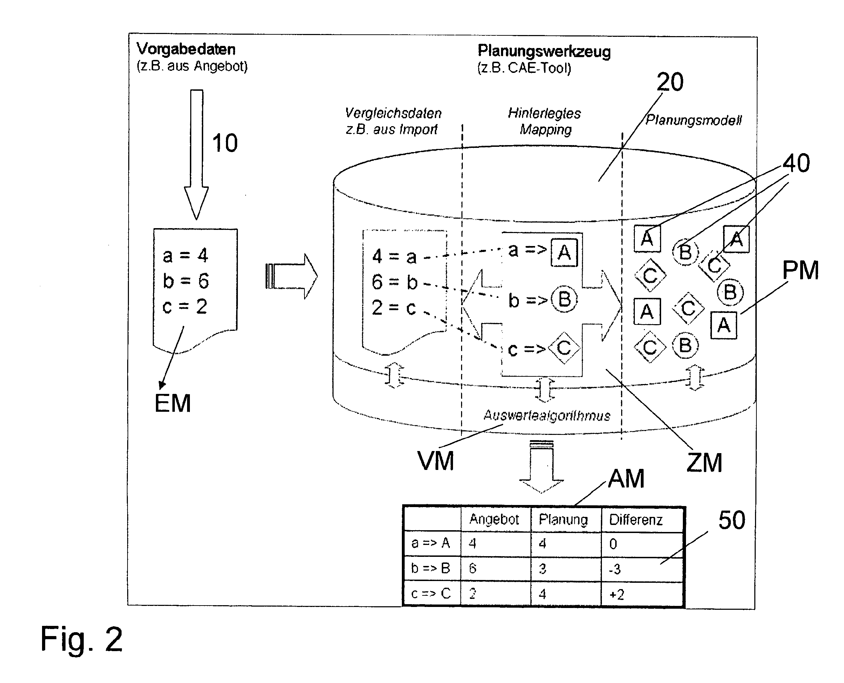

**Fig.** 2 zeigt eine Ausführungsform des erfindungsgemäßen Systems zum automatisierten, mengenbezogenen Vergleich zwischen Planungs/Projekt- und Vorgabedaten eines technischen Prozesses oder eines technischen Projektes mit einem Eingabemodul EM zur Bereitstellung der Vorgabedaten 10 und einem Planungswerkzeug 20 zur Hinterlegung der Planungsdaten 40.

Das Eingabemodul EM ist dafür vorgesehen, die einzelnen Elemente der Vorgabedaten 40 als Vorgabeelemente a, b, c dem Planungswerkzeug 20 zur weiteren Verarbeitung zu übermitteln.

Das Planungswerkzeug umfasst ein Planungsmodell PM, in welchem die einzelnen Elemente der Planungsdaten 40 als Planungselemente A, B, C abgelegt sind. Das Planungswerkzeug 20 umfasst weiterhin ein Zuordnungsmodul ZM zur Erzeugung einer Abbildung der Vorgabeelemente a, b, c auf die Planungselemente A, B, C.

Zur Abbildung der Vorgabeelemente a, b, c auf die Elemente des Planungswerkzeuges A, B, C weist das Zuordnungsmodul ZM den Elementen des Planungswerkzeuges 20 ein eindeutiges Identifizierungsmerkmal zu, verknüpft somit die Elemente des Planungswerkzeuges mit externen Entitäten und erzeugt darauf basierend eine Abbildung der Vorgabeelemente a, b, c auf die Planungselemente A, B, C.

Auf der Grundlage der erzeugten Abbildung der Vorgabeelemente a, b, c auf die Planungselemente A, B, C führt ein im Planungswerkzeug 20 integriertes mit dem Planungswerkzeug 20 zusammenwirkendes Verarbeitungsmodul VM automatisch einen mengenbezogenen Vergleich zwischen der Anzahl der Planungselemente A, B, C und der Vorgabeelemente a, b, c durch, wobei sich der Vergleich beispielsweise auf eine Stückzahlmenge oder auf Mengen mit dazugehörigen Eigenschaften bezieht, und stellt die Ergebnisse des Vergleiches einem Auswertemodul AM zur Verfügung.

Das Auswertemodul AM ermittelt die Differenz zwischen den Planungselementen A, B, C und den Vorgabeelementen a, b, c und stellt das Ergebnis des Vergleiches den Vorgabeelementen a, b, c gegenüber, wobei die Verbindung der zusammengehörigen Wertepaare, bestehend aus jeweils einem Vorgabeelement a, b, c und den zugeordneten Planungselementen A, B, C durch das Identifikationskennzeichen erreicht wird. (Vorgabemengen Entität -> Identifikationskennzeichen <- Anzahl Planungselemente).

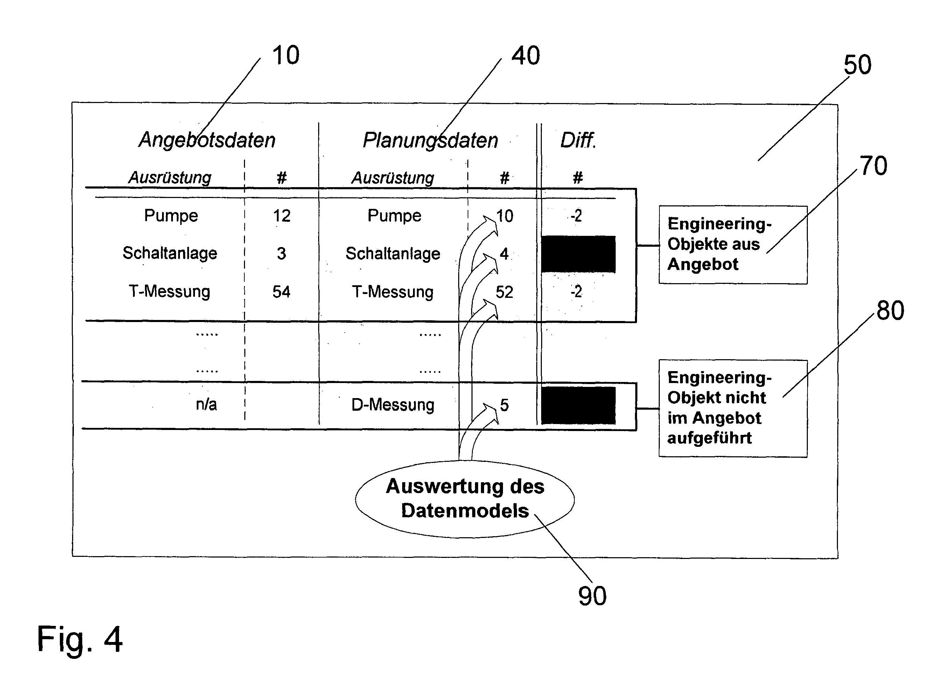

Zur Darstellung der vom Auswertemodul AM bereitgestellten Ergebnisse des Vergleichs ist beispielsweise eine Visualisierung mittels einer Tabelle 50 vorgesehen, wie sie beispielhaft in **Fig.** 4 dargestellt ist.

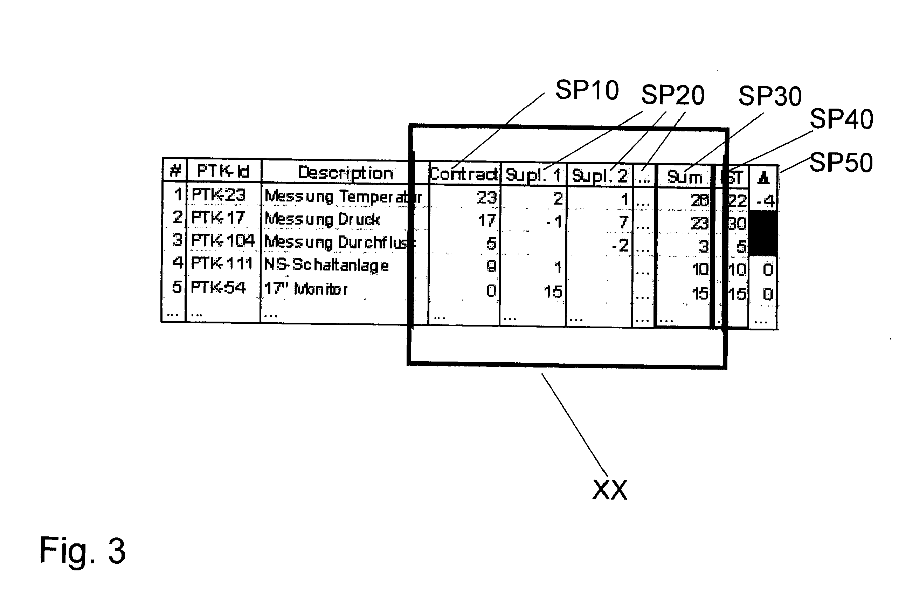

**Fig.** 3 zeigt eine beispielhafte im Auswertemodul integrierte Nachtragsverwaltung. Da die zu Projektbeginn eingepflegten Vorgabedaten 10 während der Projektlaufzeit oftmals Änderungen unterworfen sind, können diese geändert werden. Ursachen für Änderungen der Vorgabedaten 10 sind u. a. Umplanungen, Informationsgewinne, der Wegfall oder die Hinzunahme von zu erbringenden Leistungen. Die Verwaltung der Änderungen kann dabei entweder kumulativ oder inkrementell in Form von Nachträgen erfolgen. Bei einer kumulativen Verwaltung werden die Vorgabedaten oder Vorgabewerte bei Änderungen direkt überschrieben und es existiert nur ein aktueller Vorgabewert pro Entität. Bei der inkrementellen Nachtragsverwaltung werden jeweils die Mehrungen und Minderungen gespeichert und somit gleichzeitig eine Historie verwaltet.

Der in der Fig. 3 hervorgehobene Bereich XX zeigt tabellarisch dargestellte Mengen der Vorgabedaten SP10 und nachträglich eingepflegte Mehrungen und Minderungen SP20 inklusive einer Summenbildung SP30. Die Spalte SP40 stellt die Anzahl der entsprechenden Planungselemente dar; die Spalte SP50 zeigt die Differenz aus der Summe der Vorgabeelemente und Anzahl der korrespondierenden Planungselemente.

**Fig.** 4 zeigt eine beispielhafte Darstellung der vom Auswertemodul bereitgestellten Ergebnisse des Vergleichs mittels einer Tabelle 50, wobei die Vorgabedaten 10, die Planungsdaten 40, die geplanten Elemente aus dem Angebot 70 und geplanten Elemente 80, welche nicht im Angebot aufgeführt sind sowie das Auswertergebnis aus dem Datenmodell 90 gegenübergestellt sind.

Die Verwendung einer unterschiedlichen farblichen Kennzeichnung erleichtert eine schnelle Identifikation von Abweichungen zu den Vorgabedaten 10. Die Visualisierung kann dabei im Planungswerkzeug 20 integriert sein. In einer weiteren Ausführungsform ist vorgesehen, das Ergebnis als eine externe Datei zu speichern, mittels einer externen Anzeige- und Ausgabeeinheit zu visualisieren und/oder als Papierausdruck bereitzustellen.

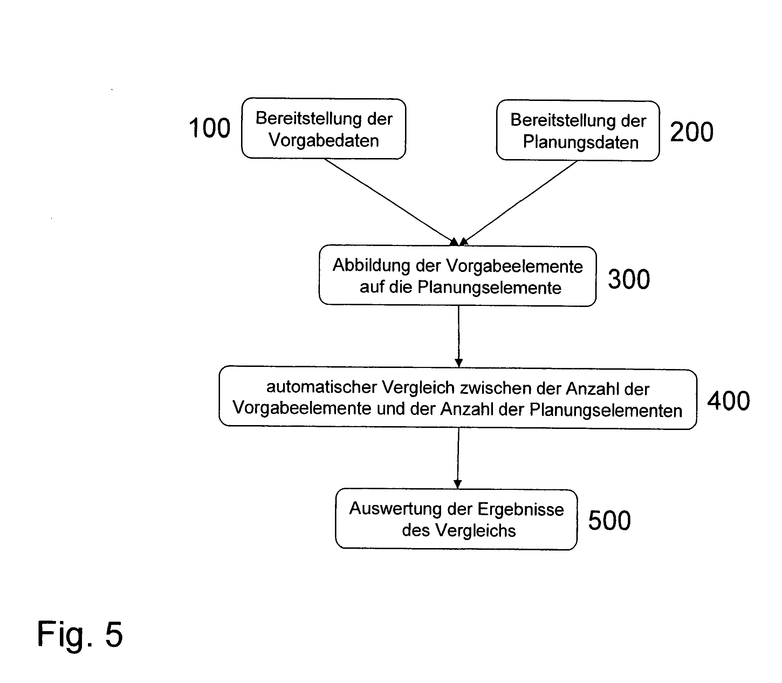

**Fig.** 5 zeigt einen beispielhaften Verfahrensablauf zum automatisierten, mengenbezogenen Vergleich zwischen Planungs/Projekt - und Vorgabedaten eines technischen Prozesses oder eines technischen Projektes anhand von Verfahrensschritten 100 - 500, wobei die Vorgabedaten, wie beispielsweise die Mengen der technischen Ausrüstung eines Angebotes eines Kraftwerkes von einem Eingabemodul bereitgestellt werden und die Planungsdaten, wie beispielsweise die Auslegungsdaten der technischen Ausrüstung eines Kraftwerkes in einem Planungswerkzeuges hinterleg, erzeugt oder verändert werden werden.

In einem ersten Verfahrensschritt 100 werden die einzelnen Elemente der Vorgabedaten als Vorgabeelemente dem Planungswerkzeug zur weiteren Verarbeitung bereitgestellt.

In einem zweiten Verfahrensschritt 200 werden die einzelnen Elemente der Planungsdaten als Planungselemente von einem Planungswerkzeug, welches das Planungsmodell beinhaltet, zur weiteren Verarbeitung bereitgestellt.

In einem dritten Schritt 300 wird mittels eines Zuordnungsmoduls eine Abbildung der Vorgabeelemente auf die Planungselemente erzeugt und auf der Grundlage der erzeugten Abbildung der Vorgabeelemente auf die Planungselemente mittels eines im Planungswerkzeug integrierten Verarbeitungsmoduls in einem weiteren Schritt 400 automatisch ein mengenbezogener Vergleich zwischen der Anzahl der Planungselemente und der Anzahl der Vorgabeelemente durchführt. In vorteilhafter Weise wird die Zuordnung entweder im Planungswerkzeug oder extern gespeichert, um Schritt 300, der bei vielen unterschiedlichen Planungsobjekten sehr aufwändig sein kann, nicht bei jedem Projekt wiederholen zu müssen.

In einem letzten Schritt 500 werden die Ergebnisse des Vergleiches in ein Auswertemodul zur weiteren Verarbeitung übertragen.

## Patentansprüche

1. System zum automatisierten, mengenbezogenen Vergleich zwischen Planungs/Projekt- und Vorgabedaten eines technischen Prozesses oder eines technischen Projektes mit einem Eingabemodul zur Bereitstellung der Vorgabedaten und einem Planungswerkzeug zur Hinterlegung der Planungsdaten, **dadurch gekennzeichnet, dass**
- das Eingabemodul dafür vorgesehen ist, die einzelnen Elemente der Vorgabedaten als Vorgabeelemente dem Planungswerkzeug zur weiteren Verarbeitung zu übermitteln,
- das Planungswerkzeug ein Planungsmodell aufweist, in welchem die einzelnen Elemente der Planungsdaten als Planungselemente abgelegt sind,
- das Planungswerkzeug weiterhin ein Zuordnungsmodul zur Erzeugung einer Abbildung der Vorgabeelemente auf die Planungselemente aufweist,
- ein im Planungswerkzeug integriertes Verarbeitungsmodul auf der Grundlage der erzeugten Abbildung der Vorgabeelemente auf die Planungselemente automatisch einen mengenbezogenen Vergleich zwischen der Anzahl der Planungselemente und der Vorgabeelemente durchführt, und die Ergebnisse des Vergleiches einem Auswertemodul zur Verfügung stellt.

2. System nach Anspruch 1, **dadurch gekennzeichnet, dass** das Zuordnungsmodul, den Planungselementen jeweils ein eindeutiges Identifizierungsmerkmal zuweist, die Planungselemente jeweils mit externen Entitäten verknüpft und darauf basierend eine Abbildung der jeweiligen Vorgabeelemente auf die entsprechenden Planungselemente erzeugt.

3. System nach Anspruch 2, **dadurch gekennzeichnet, dass** das Identifizierungsmerkmal zur Identifikation und Zuordnung der Elemente und Entitäten vorgesehen ist.

4. System nach einem der vorherigen Ansprüche, **dadurch gekennzeichnet, dass** die erzeugte Abbildung der Vorgabeelemente auf die Planungselemente anpassbar ist.

5. System nach einem der vorherigen Ansprüche, **dadurch gekennzeichnet, dass** ein Angebot oder eine Planungsunterlage Vorgabedaten bereitstellt.

6. System nach einem der vorherigen Ansprüche, **dadurch gekennzeichnet, dass** das Planungswerkzeug die Planungsdaten als zählbare Elemente, Objekte und/oder Baugruppen generiert.

7. System nach einem der vorherigen Ansprüche, **dadurch gekennzeichnet, dass** die Vorgabedaten außerhalb des Planungswerkzeuges verwaltet und jeweils erst zur Auswertung in das Auswertemodul einlesbar sind.

8. System nach einem der Ansprüche 1 bis 6, **dadurch gekennzeichnet, dass** die Vorgabedaten in das Planungswerkzeug importierbar und die entsprechenden Mengen im Planungswerkzeug speicherbar sind.

9. System nach einem der vorherigen Ansprüche, **dadurch gekennzeichnet, dass** das Auswertemodul eine Differenz zwischen den Planungselementen und den Vorgabeelementen ermittelt.

10. System nach einem der vorherigen Ansprüche, **dadurch gekennzeichnet, dass** das Auswertemodul das Ergebnisse des Vergleiches den Vorgabeelementen gegenüber stellt.

11. System nach einem der vorherigen Ansprüche, **dadurch gekennzeichnet, dass** sich der mengenbezogene Vergleich zwischen den Planungs- und Vorgabedaten auf Stückzahlen, Mengen und/oder kumulierte quantifizierbare Eigenschaften bezieht.

12. System nach einem der vorherigen Ansprüche, **dadurch gekennzeichnet, dass** zur Darstellung des vom Auswertemodul bereitgestellten Ergebnisses des Vergleiches eine Visualisierung mittels einer Tabelle vorgesehen ist.

13. System nach einem der vorherigen Ansprüche, **dadurch gekennzeichnet, dass** ein Erweiterungsmodul vorgesehen ist, welches mittels eines Auswertealgorithmus eine oder mehrere quantifizierbare Eigenschaften der ermitteltem Elemente auswertet und diese mit den entsprechenden Vorgabedaten vergleicht.

14. Verfahren zum automatisierten, mengenbezogenen Vergleich zwischen Planungs/Projekt- und Vorgabedaten eines technischen Prozesses oder eines technischen Projektes mit einem Eingabemodul zur Bereitstellung der Vorgabedaten und einem Planungswerkzeug zur Hinterlegung der Planungsdaten, **dadurch gekennzeichnet, dass**
- die einzelnen Elemente der Vorgabedaten als Vorgabeelemente dem Planungswerkzeug zur weiteren Verarbeitung bereitgestellt werden,
- die einzelnen Elemente der Planungsdaten als Planungselemente von einem Planungsmodell zur weiteren Verarbeitung bereitgestellt werden,
- mittels eines Zuordnungsmoduls eine Abbildung der Vorgabeelemente auf die Planungselemente erzeugt wird,
- auf der Grundlage der erzeugten Abbildung der Vorgabeelemente auf die Planungselemente mittels eines im Planungswerkzeug integriertem Verarbeitungsmoduls automatisch ein mengenbezogener Vergleich zwischen der Anzahl der Planungselemente und der Vorgabeelemente durchführt wird, und die Ergebnisse des Vergleiches einem Auswertemodul zur Verfügung gestellt werden.

15. Verfahren nach Anspruch 14, **dadurch gekennzeichnet, dass** den Planungselementen mittels des Zuordnungsmoduls jeweils ein eindeutiges Identifizierungsmerkmal zugewiesen wird, die Planungselemente jeweils mit externen Entitäten verknüpft werden und darauf basierend eine Abbildung der jeweiligen Vorgabeelemente auf die entsprechenden Planungselemente erzeugt werden.

16. Verfahren nach Anspruch 14 oder 15, **dadurch gekennzeichnet, dass** mittels des Identifizierungsmerkmales eine Identifikation und Zuordnung der Elemente und Entitäten ausgeführt werden.

17. Verfahren nach einem der Ansprüche 14 bis 16, **dadurch gekennzeichnet, dass** die Vorgabedaten aus einem Angebot oder eine Planungsunterlage bereitgestellt werden.

18. Verfahren nach einem der Ansprüche 14 bis 17, **dadurch gekennzeichnet, dass** die Planungsdaten zählbare Elemente, Objekte und/ oder Baugruppen sind, die vom Planungswerkzeug generiert werden.

19. Verfahren nach einem der Ansprüche 14 bis 18, **dadurch gekennzeichnet, dass** die Vorgabedaten außerhalb des Planungswerkzeuges verwaltet werden und jeweils erst zur Auswertung in das Auswertemodul einlesen werden.

20. Verfahren nach einem der Ansprüche 14 bis 18 **dadurch gekennzeichnet, dass** die Vorgabedaten in das Planungswerkzeug importiert werden und die entsprechenden Mengen im Planungstool gespeichert werden.

21. Verfahren nach einem der Ansprüche 14 bis 20, **dadurch gekennzeichnet, dass** mittels des Auswertemoduls eine Differenz zwischen den Planungselementen und den Vorgabeelementen ermittelt wird.

22. Verfahren nach einem der Ansprüche 14 bis 21, **dadurch gekennzeichnet, dass** das Ergebnis des Vergleiches den Vorgabeelementen gegenübergestellt wird.

23. Verfahren nach einem der Ansprüche 14 bis 22, **dadurch gekennzeichnet, dass** die vom Auswertemodul bereitgestellten Ergebnisse des Vergleiches mittels einer Tabelle visualisiert werden.

24. Verfahren nach einem der Ansprüche 14 bis 23, **dadurch gekennzeichnet, dass** mittels eines Auswertealgorithmus eine oder mehrere quantifizierbare Eigenschaften der ermitteltem Elemente auswertet und diese mit den entsprechenden Vorgabewerten verglichen werden.

25. Verwendung des Systems und Verfahrens nach einem der vorherigen Ansprüche in der technischen Planung, insbesondere in der Verfahrenstechnik, der Anlagentechnik, dem Anlagenbau, der Automatisierungstechnik, der Elektrotechnik oder Verkabelung.
